# EUROPÄISCHE PATENTSCHRIFT

(11) **EP 3 320 959 B1**
(45) Veröffentlichungstag und Bekanntmachung des Hinweises auf die Patenterteilung: **06.11.2019**
(21) Anmeldenummer: 17196999.1
(22) Anmeldetag: 18.10.2017
(51) Int. Cl.: B01D 1/14, B01D 1/16, C02F 1/04, C02F 1/12, F28F 25/06, F28C 1/14

(54) **VORRICHTUNG UND VERFAHREN ZUR ENTSORGUNG VON ABWASSER**
DEVICE AND METHOD FOR THE DISPOSAL OF WASTE WATER
DISPOSITIF ET PROCÉDÉ D'ÉLIMINATION D'EAUX USÉES

(30) Priorität: 10.11.2016 DE 102016121579
(43) Veröffentlichungstag der Anmeldung: 16.05.2018
(73) Patentinhaber: Biogastechnik Süd GmbH, 88316 Isny im Allgäu (DE)
(72) Erfinder: Maier, Clemens, 88316 Isny (DE); Maier, Gregor, 88316 Isny (DE)
(74) Vertreter: Höchtl, Walter

(56) Entgegenhaltungen:
- WO-A1-2014/194350
- DE-A1- 2 706 430
- DE-A1-102013 224 351
- DE-T2- 60 219 510
- US-A1- 2009 166 171

## Beschreibung

Die Erfindung bezieht sich auf eine Vorrichtung zu Entsorgung von Abwasser in die Atmosphäre.

Bei verschiedenen industriellen Anlagen fällt Abwasser an, das nicht in Gewässer eingeleitet und auch nicht direkt ins Grundwasser entsorgt werden kann oder darf. Hingegen ist es möglich und erlaubt, das Abwasser in die Atmosphäre zu "entsorgen".

Solche industrielle Anlagen können zum Beispiel Trocknungsanlagen sein, bei denen der bei der Trocknung entstehende Dampf zu Abwasser kondensiert wird. Je nach Trockengut liegt dann unterschiedlich reines Kondensat vor. Dieses Kondensat wird im Sinne dieser Anmeldung als "Abwasser" bezeichnet. Aber auch jedes andere Wasser aus industriellen Anlagen, das noch Verunreinigungen enthält und nicht mehr gebraucht bzw. verbraucht wird und daher "entsorgt" werden muss, ist im Sinne dieser Anmeldung "Abwasser".

Bekannte Trocknungsanlagen sind beispielsweise Anlagen zur Trocknung von Gärresten aus Biogasanlagen, wie beispielsweise in der deutschen Patentanmeldung 102013018464 beschrieben. Denkbar wäre aber auch, Restwasser von Kläranlagen oder Kraftwerken auf die hier beschriebene Weise zu entsorgen, wenn es nicht die Bedingungen für die Einleitung in Gewässer erfüllt.

Aus der DE 602 19 510 T2 ist ein Verfahren zur Bekämpfung von Legionella in Kühltürmen bekannt. Es befinden sich Wasserverteiler im Kühlturm, mit denen Wasser auf ein Hochtemperatur-Turmfüllmaterial gegeben wird. Mittels eines Turmlüfters wird eine sogenannte "Kühlturm Dunstwolke" über einen Luftauslass ausgeblasen. Eine Einbrignung von Abwasser in die Atmosphäre mittels einer auf dem Kühlturm angebrachten Vernebelungsvorrichtung ist hier nicht vorgesehen.

Die US Patentanmeldung 2009/0166171 A1 beschreibt "Trifunctional Membrane Tubes" bei denen "membrane devices" über eine Sprühvorrichtung mit industriellem Fluid besprüht werden. Ein Gebläse saugt Luft von unten nach oben an den Mebranen vorbei, um den abwärts gerichteten Fluss der Flüssigkeit an den Membranen zu verlangsamen. Eine Einbrignung von Abwasser in die Atmosphäre mittels Vernebelungsvorrichtungen ist auch hier nicht vorgesehen.

Erfindungsgemäß wird das Abwasser über eine Vernebelungseinrichtung in die Atmosphäre verbracht. Allerdings reicht es nicht aus, das Abwasser relativ bodennah zu vernebeln, da sich je nach Temperatur und Wetterlage Bodennebel bilden kann oder sich Wasser am Boden niederschlägt. Dieses Problem kann je nach Wetterlage ganzjährig bestehen. Eine Anbringung von Vernebelungsvorrichtungen in einer Höhe, in der es nicht mehr zu diesen Effekten kommt, wäre jedoch konstruktiv sehr aufwendig und kostenintensiv.

Aufgabe der Erfindung ist es daher eine Vorrichtung und ein Verfahren zur Verfügung zu stellen, um Abwasser in die Atmosphäre so zu entsorgen, dass die beschriebenen Nachteile vermieden werden.

Diese Aufgabe wird durch eine Vorrichtung zur Entsorgung von Abwasser in die Atmosphäre nach Anspruch 1 gelöst, wobei die Vorrichtung eine Wärmequelle umfasst, die einen vertikalen Luftstrom erzeugt, wobei die Wärmequelle von einem Gehäuse umfasst ist, das am oberen Ende eine Auslassöffnung für den Luftstrom aufweist, wobei mindestens eine Vernebelungseinrichtung, oberhalb der Auslassöffnung für den Luftstrom so angebracht ist, dass sich der von der Vernebelungseinrichtung erzeugte Nebel im Bereich des Luftstroms der Wärmequelle befindet und wobei die Vernebelungsvorrichtung mit dem Abwasser gespeist wird. Es soll dabei möglichst der gesamte Nebel vom Luftstrom mitgenommen werden.

Erfindungsgemäß wird dabei ein Kühlturm als Wärmequelle verwendet, auf dem die Vernebelungsvorrichtung angebracht wird.

Eine vorteilhafte Ausbildung der Erfindung besteht darin, die Vernebelungseinrichtung auf einem Kühlturm im Bereich seines Abluftstroms zu befestigen und die Vernebelungseinrichtung aus dem Wasserablauf des Kühlturmes zu speisen. Je nach Stärke des Abluftstroms, der Menge des zu entsorgenden Abwassers kann es sinnvoll sein, zwei oder mehrere Vernebelungseinrichtungen im Bereich des Abluftstroms, beispielsweise übereinander anzubringen.

Eine weitere vorteilhafte Ausbildung der Erfindung besteht darin, die Düsen der Vernebelungsvorrichtung so auszubilden, dass der Nebelausstoß in einem vorgegebenen Elevationswinkel nach oben erfolgt. Die dadurch mitgegebene vertikale Strömungskomponente erleichtert den vertikalen Transport durch die Wärmequelle.

Die Aufgabe wird durch ein Verfahren zur Entsorgung von Abwasser in die Atmosphäre nach Anspruch 5 gelöst, bei dem durch eine Vernebelungseinrichtung (V) vernebeltes Wasser vom vertikalen Luftstrom einer Wärmequelle (K) mitgenommen wird.

Eine vorteilhafte Ausbildung des Verfahrens besteht darin, dass die Vernebelungseinrichtung (V) durch das Wasser aus dem Wasserablauf (WA) eines Kühlturms (K) gespeist wird.

Ausbildungen der Ausgestaltungen werden anhand der Zeichnung beschrieben. Dabei zeigen:
- Figur 1: einen Kühlturm K mit drei Vernebelungseinrichtungen V
- Figur 2: eine Wärmequelle W mit einer Vernebelungseinrichtung V
- Figur 3: eine Wärmequelle W mit einer Vernebelungseinrichtung V und einem Strömungsgleichrichter SG

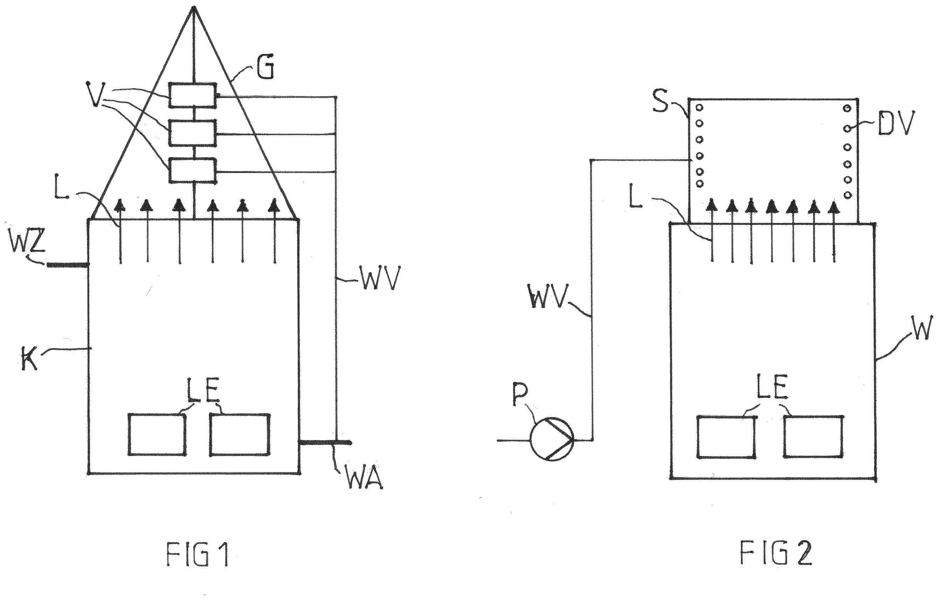

Die schematische Darstellung gemäß Figur 1 zeigt einen Kühlturm K als Wärmequelle. Der Kühlturm K ist zum Beispiel ein sogenannter Nasskühlturm, dem über eine Wasserzuleitung WZ warmes Abwasser zugeführt wird. Dieses Abwasser kann von einer beliebigen Anlage - wie Eingangs beschrieben - kommen. Die Herkunft des Abwassers wird im Folgenden als "Quelle" bezeichnet. Das Abwasser verdunstet teilweise oder ganz im Kühlturm und der warme Nebel steigt als warme Luftströmung L nach oben - wie durch die Pfeile L angedeutet. Durch die Lufteinlass-Öffnungen LE strömt Umgebungsluft nach.

Als Kühlturm können dabei alle Typen, beispielsweise saug- oder druckbelüftete Kühltürme, verwendet werden. Die Luftströmung L kann durch ein - hier nicht dargestelltes - Gebläse verstärkt werden.

Auf dem Kühlturm K ist ein Gerüst G angebracht, an dem Vernebelungseinrichtungen V - im Beispiel 3 - im Zentrum der Luftströmung L befestigt sind. Im Prinzip können alle geeigneten Vernebelungseinrichtungen - im folgenden auch kurz mit "Vernebler" bezeichnet - verwendet werden. Beispielsweise können Rotationsvernebler eingesetzt werden. Auswahl, Anzahl, Auslegung, etc. sind dabei dem Fachmann überlassen, der entsprechende Vernebler nach der zu entsorgenden Abwassermenge sowie in Abhängigkeit von der Luftströmung L, etc., einsetzt.

Die Vernebler V werden im Ausführungsbeispiel gemäß Figur 1 mit dem Abwasser aus dem Abwasserablauf WA über die Versorgungsleitung WV und eine hier nicht dargestellte Pumpe, gespeist. Das heißt, dass die Vernebler V das Abwasser entsorgen, das nicht im Kühlturm verdunstet wird. Auch die Auslegung des Kühlturms K sowie der entsprechenden Vernebler V ist dem Fachmann überlassen.

Die Vernebler können aber auch direkt mit Abwasser aus einer Quelle gespeist werden, also mit Abwasser, das nicht erst den Kühlturm durchläuft. Beispielsweise könnte ein Teil des Abwassers aus der Quelle dem Kühlturm zugeführt werden und der andere Teil der Vernebelungseinrichtung. Kühlturm und Vernebelungseinrichtung können dann so ausgelegt werden, dass sie jeweils die Ihnen zugeführte Abwassermenge verdampfen und der Luftstrom aus dem Kühlturm ausreicht, den Nebel / Wasserdampf in höhere Atmosphären zu transportieren.

Soweit doch noch Rest- Abwasser übrig bleibt, kann dieses z. Bsp. zwischengespeichert werden.

Das Ausführungsbeispiel gemäß Figur 2 zeigt einen Kühlturm als Wärmequelle W mit einer von Figur 1 verschiedenen Vernebelungseinrichtung DV. Auch hier kann der Luftstrom L mittels eines - nicht dargestellten - Gebläses oder Ventilators verstärkt werden.

Der Luftstrom der Wärmequelle W wird durch einen aufgesetzten Kamin S geführt. In diesem Kamin S sind Düsenvernebler DV, beispielsweise Hochdruckdüsenvernebler angebracht. Diese werden aus einer Quelle über eine Wasserzuleitung WV und über eine Hochdruckpumpe P mit zu entsorgendem Abwasser gespeist.

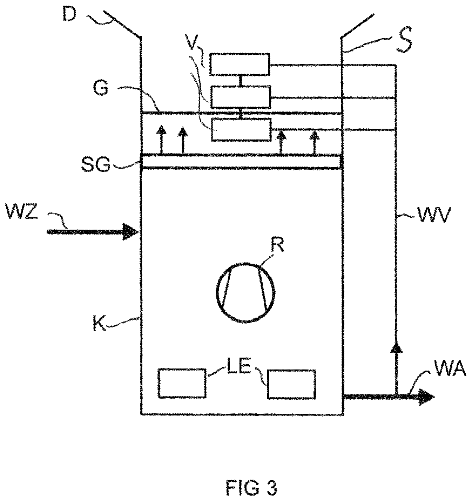

Im Ausführungsbeispiel gemäß Figur 3 ist wie bei Figur 2 ein Kamin S auf der Luftauslassöffnung des Kühlturms K angebracht. Das die Vernebler V tragende Gerüst G ist hier an der inneren Kaminwand befestigt. Der Kamin K öffnet sich an seinem oberen Ende nach außen, so dass ein Diffusor D gebildet wird. Darüber hinaus ist hier ein Gebläse R gezeigt, durch den der vertikale Luftstrom erzeugt oder verstärkt wird. Der durch das Gebläse R verwirbelte Luftstrom wird mittels eines Strömungsgleichrichters SG in einen linearen Luftstrom überführt um den Wirkungsgrad zu erhöhen.

Selbstverständlich kann dieser "Kaminvernebler" auch auf einem Kühlturm K, wie in Figur 1 dargestellt, angebracht werden. Ebenso kann die in Figur 1 dargestellte Vernebelungsvorrichtung V auch auf der Wärmequelle W gemäß Figur 2 angebracht werden. Prinzipiell können alle Arten von Verneblern, beispielweise auch Hochdruckreiniger mit entsprechenden Düsen auf jeder Wärmequelle W, K zum Einsatz kommen.

## Patentansprüche

1. Vorrichtung zur Entsorgung von Abwasser in die Atmosphäre mit 1.1
einem Kühlturm (K), der am oberen Ende eine Auslassöffnung für einen Luftstrom (L) aufweist,
1.2 mindestens einer Vernebelungsvorrichtung (V, DV), wobei die mindestens eine Vernebelungsvorrichtung (V, DV) oberhalb der Auslassöffnung für den Luftstrom (L) an einem Gerüst angebracht ist
und in einem Kamin (S) angeordnet ist
1.3 wobei die Vernebelungsvorrichtung (V) über eine Versorgungsleitung (WV) mit dem Abwasser gespeist wird.

2. Vorrichtung nach Anspruch 1, wobei der Kühlturm (K) einen Wasserzulauf (WZ) und einem Wasserablauf (WA) aufweist und wobei die Vernebelungsvorrichtung (V, DV) mit Wasser vom Wasserablauf (WA) des Kühlturms (K) gespeist wird.

3. Vorrichtung nach einem der vorstehenden Ansprüche, wobei mindestens zwei Vernebelungsvorrichtungen (V, DV) übereinander angeordnet sind.

4. Vorrichtung nach einem der vorstehenden Ansprüche, wobei die Düsen der Vernebelungsvorrichtung (V, DV) so ausgebildet sind, dass der Nebelausstoß in einem vorgegebenen Elevationswinkel nach oben erfolgt.

5. Verfahren zur Entsorgung von Abwasser in die Atmosphäre in einer Vorrichtung nach einem der vorstehende Ansprüche, wobei durch eine auf einem Kühlturm (K) angebrachte Vernebelungseinrichtung (V, DV) vernebeltes Wasser vom vertikalen Luftstrom einer Wärmequelle (W) mitgenommen wird.

6. Verfahren nach Anspruch 5, wobei die Vernebelungseinrichtung (V, DV) durch das Wasser aus dem Wasserablauf (WA) eines Kühlturms (K) gespeist wird.

## Claims

1. Device for the disposal of waste water into the atmosphere with
1.1. a cooling tower (K) having an outlet for an air stream (L) at its upper end,
1.2 at least one spraying device (V, DV), wherein the at least one spraying device (V, DV) is mounted on a frame above the outlet opening for the air flow (L) and is arranged in a chimney (S),
1.3 where the spraying device (V) is fed with the waste water via a supply line (WV).

2. Device according to claim 1, wherein the cooling tower (K) has a water inlet (WZ) and a water outlet (WA), and wherein the spraying device (V, DV) is supplied with water from the water outlet (WA) of the cooling tower (K).

3. Device according to one of the previous claims, wherein at least two spraying devices (V, DV) are arranged one above the other.

4. Device according to one of the previous claims, wherein the nozzles of the spraying device (V, DV) are designed in such a way that the spraying of mist takes place at a predetermined angle of elevation upwards.

5. Method for the disposal of waste water into the atmosphere in an device according to one of the above claims, wherein water atomized by a spraying device (V, DV) mounted on a cooling tower (K) is entrained by the vertical air flow of a heat source (W).

6. Method according to claim 5, wherein the atomizer (V, DV) is fed by the water from the water outlet (WA) of a cooling tower (K).

## Revendications

1. Dispositif pour l'élimination des eaux usées dans l'atmosphère avec
1.1 une tour de refroidissement (K) comportant une ouverture de sortie à l'extrémité supérieure pour un courant d'air (L),
1.2 au moins un dispositif d'atomisation (V, DV), ledit au moins un dispositif d'atomisation (V, DV) étant monté au-dessus de l'ouverture de sortie pour le courant d'air (L) à un échafaudage
et agencé dans une cheminée
1.3 le dispositif d'atomisation (V) étant alimenté avec les eaux usées par une conduite d'alimentation (WV).

2. Dispositif selon la revendication 1, la tour de refroidissement (K) comportant une arrivée d'eau (WZ) et une évacuation d'eau (WA), et le dispositif d'atomisation (V, DV) étant alimenté avec de l'eau de l'évacuation d'eau (WA) de la tour de refroidissement (K).

3. Dispositif selon l'une quelconque des revendications précédentes, au moins deux dispositifs d'atomisation (V, DV) étant disposés l'un sur l'autre.

4. Dispositif selon l'une quelconque des revendications précédentes, les buses du dispositif d'atomisation (V, DV) étant configurées de sorte que l'émission du brouillard s'effectue dans un angle d'élévation prédéterminé vers le haut.

5. Procédé d'élimination des eaux usées dans l'atmosphère dans un dispositif selon l'une quelconque des revendications précédentes, de l'eau atomisée étant entraînée par le courant d'air vertical d'une source de chaleur (W) par l'intermédiaire d'un dispositif d'atomisation (V, DV) agencé sur une tour de refroidissement (K).

6. Procédé selon la revendication 5, le dispositif d'atomisation (V, DV) étant alimenté par l'eau de l'évacuation d'eau (WA) d'une tour de refroidissement (K).
